Europäisches Patentamt

European Patent Office

Office européen des brevets

(19)

(11) Numéro de publication : **0 013 648**
**B1**

## (12) FASCICULE DE BREVET EUROPÉEN

(45) Date de publication du fascicule du brevet :
02.12.81

(51) Int. Cl.³ : **F 16 C 7/02**, **B 29 C 17/02**,
**B 29 D 3/02// B64C13/30**

(21) Numéro de dépôt : **80400026.3**

(22) Date de dépôt : **10.01.80**

(54) **Procédé pour la réalisation d'une bielle de commande ou de transmission d'efforts.**

(30) Priorité : **15.01.79 FR 7900863**

(43) Date de publication de la demande :
**23.07.80 (Bulletin 80/15)**

(45) Mention de la délivrance du brevet :
**02.12.81 Bulletin 81/48**

(84) Etats contractants désignés :
**BE CH DE GB IT NL SE**

(56) Documents cités :
**FR - A - 2 152 289**
**FR - A - 2 265 656**
**FR - A - 2 284 819**
**FR - A - 2 309 453**
**FR - A - 2 343 918**
**FR - A - 2 371 598**
**FR - A - 2 385 935**
**US - A - 3 082 515**
**US - A - 3 553 978**

(73) Titulaire : **Societe Nationale Industrielle Aerospatiale Société anonyme dite:**
**37 Bld de Montmorency**
**F-75016 Paris (FR)**

(72) Inventeur : **Mialon, Jacques**
**l'Arbois Résidence "Les Hermes"**
**F-13127 Vitrolles (FR)**

(74) Mandataire : **Bonnetat, Christian**
**PROPI Conseils 23 rue de Léningrad**
**F-75008 Paris (FR)**

Imprimerie Jouve, 17, rue du Louvre, 75001 Paris, France

## Procédé pour la réalisation d'une bielle de commande ou de transmission d'efforts

La présente invention concerne un procédé pour la réalisation d'une bielle de commande ou de transmission d'efforts, ainsi qu'une bielle obtenue par la mise en œuvre de ce procédé. Elle s'applique tout particulièrement, quoique non exclusivement, à la réalisation d'une bielle de transmission de commande pour aéronef, et notamment pour aérodyne.

On sait en effet que, pour la transmission de mouvements ou d'ordres, il est souvent nécessaire d'utiliser des tringleries pourvues de bielles. De même, certaines structures d'aérodyne comportent entre deux organes fixes une liaison par bielles, celles-ci assurant entre ces deux organes la transmission d'efforts de traction ou de compression dans l'axe desdites bielles. Ces bielles comportent généralement une tige tubulaire à au moins l'une des extrémités de laquelle est prévu un organe de liaison, tel qu'une chape, un œilleton, une articulation à rotule, une fourche, etc.

Dans les bielles connues, ledit organe de liaison est généralement solidaire d'un embout qui est rapporté à ladite tige tubulaire, ledit organe de liaison étant donc solidarisé de la tige par ledit embout.

Ces bielles connues comportent une tige métallique en alliage léger, tandis que les embouts sont en alliage de fer. Du fait de la différence des métaux constituant la tige tubulaire et les embouts, il apparaît un couple galvanique important entre les métaux, ce qui peut occasionner une corrosion importante, malgré l'interposition habituelle d'un mastic ou d'un vernis isolant avant solidarisation desdits embouts sur ladite tige. De plus, ces bielles connues sont relativement lourdes. Pour tenter de remédier à ces inconvénients, ainsi que pour profiter des excellentes qualités mécaniques des matériaux stratifiés (fibres résistantes de verre, de carbone ou analogue enrobées de résine polymérisée), on a déjà proposé d'utiliser une tige de bielle réalisée en de tels matériaux. Mais, dans toutes les réalisations antérieurement connues, la solidarisation de la partie courante centrale de la bielle en matériau stratifié avec les organes de liaison à chacune de ses extrémités, organes généralement constitués d'embouts métalliques, nécessite une structure d'ancrage de l'un sur l'autre par collage, frettage ou autre procédé de liaison, conduisant à un coût élevé de fabrication.

Par ailleurs, le brevet US-A-3 082 515 (RAPPLEYEA) décrit un procédé pour la réalisation d'un élément protecteur pour le visage, comportant :

— la réalisation d'un élément tubulaire ;

— l'aplatissement des extrémités de cet élément tubulaire de manière que celles-ci soient obturées et,

— la formation d'alésage pour la fixation dans la partie aplatie de cet élément tubulaire.

De plus, au titre de l'article 54(3) CBE, on mentionne que la demande de brevet européen N° 12090 au nom de la Demanderesse décrit un procédé pour l'agencement d'un organe de liaison à une extrémité d'une bielle de commande constituée par une tige dont au moins ladite extrémité est tubulaire et en une matière déformable, ladite extrémité tubulaire déformable étant aplatie sur une pièce intermédiaire destinée à renforcer ladite extrémité et à permettre un agencement résistant dudit organe de liaison. Selon ce procédé, la pièce intermédiaire est constituée par un fourreau de fibres résistantes imprégné de résine polymérisable et appliqué sensiblement contre la paroi intérieure de ladite extrémité, on procède à l'aplatissement de ladite extrémité au moins jusqu'à ce que les portions de face intérieure dudit fourreau, disposées de part et d'autre du plan d'aplatissement, soient appliquées l'une contre l'autre en obturant de façon sensiblement totale la section de la portion aplatie de ladite extrémité tubulaire et, après ledit aplatissement, on procède à la polymérisation de la résine imprégnant ledit fourreau.

La présente invention a pour objet de remédier aux inconvénients des bielles connues rappelés ci-dessus. Elle concerne directement la fabrication de bielles légères et de faible prix de revient, destinées à être insérées dans des chaînes de commande de vol pour avions légers ou hélicoptères dans lesquels les forces transmises sont relativement faibles, mais où, en revanche, une grande fiabilité est nécessaire, ces bielles étant pour la plus grande partie en matériaux stratifiés mais ne comportant pas d'embouts rapportés. L'invention concerne également la fabrication de bielles structurales capables de transmettre d'importants efforts axiaux, statiques ou dynamiques en traction et/ou en compression. Ces bielles, pour lesquelles une grande fiabilité est recherchée, sont utilisées par exemple comme raidisseurs internes dans les caissons des voilures d'avions ou comme éléments constitutifs du bâti de fixation de la boîte de transmission principale des hélicoptères sur le dessus du fuselage de ceux-ci.

A cette fin, selon l'invention, le procédé pour la réalisation d'une bielle de commande ou de transmission d'efforts comportant un corps tubulaire en stratifié de fibres à haute résistance imprégnées de résine polymérisable, dont au moins l'une des extrémités a été aplatie pour y agencer un organe de liaison, est remarquable en ce que l'on commence par réaliser un élément tubulaire de fibres à haute résistance imprégnées de résine polymérisable, en ce que l'on procède ensuite à l'aplatissement de ladite extrémité de manière que celle-ci soit obturée, après quoi on procède à la polymérisation de la résine imprégnant ledit élément, puis on agence ledit organe de liaison dans la partie aplatie et durcie dudit élément.

Ainsi, on obtient une bielle dont le corps tubulaire et les extrémités sont complètement en matière stratifiée, les organes de liaison étant directement fixés sur lesdites extrémités, sans interposition d'un embout rapporté.

De préférence, l'élément tubulaire est obtenu par enroulement, sur un mandrin en une matière du genre mousse déformable, de fibres à haute résistance enrobées de résine polymérisable et ledit mandrin reste en place à l'intérieur dudit élément tubulaire pendant l'aplatissement de la ou des extrémités de celui-ci et la polymérisation de la résine. La longueur du mandrin est au plus égale à celle de l'élément tubulaire et les extrémités dudit mandrin présentent éventuellement un moindre diamètre que le reste dudit élément, pour favoriser la mise en forme des extrémités de l'élément tubulaire au moment de leur aplatissement, tout en permettant un remplissage complet dudit élément.

Avantageusement, entre une extrémité du mandrin et une extrémité de l'enroulement de fibres, on dispose un manchon de fibres à haute résistance imprégnées de résine polymérisable, qui se trouve appliqué sensiblement entre la paroi intérieure de l'extrémité dudit enroulement, puis on procède à l'aplatissement de ladite extrémité au moins jusqu'à ce que les portions de face intérieure dudit manchon, disposées de part et d'autre du plan d'aplatissement, soient appliquées l'une contre l'autre en obturant de façon sensiblement totale la section de la portion aplatie de ladite extrémité de l'enroulement et après ledit aplatissement, on procède simultanément à la polymérisation de la résine imprégnant ledit manchon et de celle imprégnant ledit enroulement.

A cet effet, il est avantageux de prévoir un mandrin dont au moins une extrémité présente un prolongement de moindre diamètre coaxial au reste dudit mandrin, mais séparé de celui-ci par un épaulement. Sur ce prolongement, on peut enrouler des fibres à haute résistance imprégnées de résine polymérisable pour former ledit manchon jusqu'à ce que le diamètre de celui-ci soit sensiblement égal au diamètre normal du mandrin, puis sur le mandrin et sur ledit manchon ainsi réalisé, on enroule les fibres à haute résistance imprégnées de résine polymérisable destinées à former l'élément tubulaire.

Avantageusement, la longueur du manchon de fibres à haute résistance imprégnées de résine polymérisable est choisie plus grande que la longueur du prolongement de moindre diamètre, pour se prolonger vers l'extérieur de ce prolongement sur une longueur sensiblement égale à la portion d'extrémité aplatie de la bielle. Afin de permettre un remplissage total de la bielle par la matière du mandrin, même au voisinage de la portion aplatie de ladite bielle, il est avantageux que l'extrémité libre du prolongement soit effilée, par exemple conique.

Un tel mandrin peut être d'une seule pièce et il peut être réalisé en une mousse plastique rigide et légère, telle que de la mousse de polyuréthane.

Les figures du dessin annexé feront bien comprendre comment l'invention peut être réalisée.

La figure 1 montre un mandrin pour la réalisation d'une bielle, selon un mode de réalisation préféré de l'invention.

Les figures 2, 3 et 4 illustrent différentes étapes de mise en œuvre du procédé selon l'invention, au moyen du mandrin de la figure 1.

La figure 5 est une coupe selon la ligne V-V de la figure 4.

La figure 6 est une vue de face d'une extrémité de bielle obtenue par la mise en œuvre du procédé selon l'invention.

La figure 7 est une coupe longitudinale selon la ligne VII-VII de la figure 6.

La figure 8 est une coupe transversale selon la ligne VIII-VIII de la figure 6, l'organe de liaison étant supposé n'être pas encore en place.

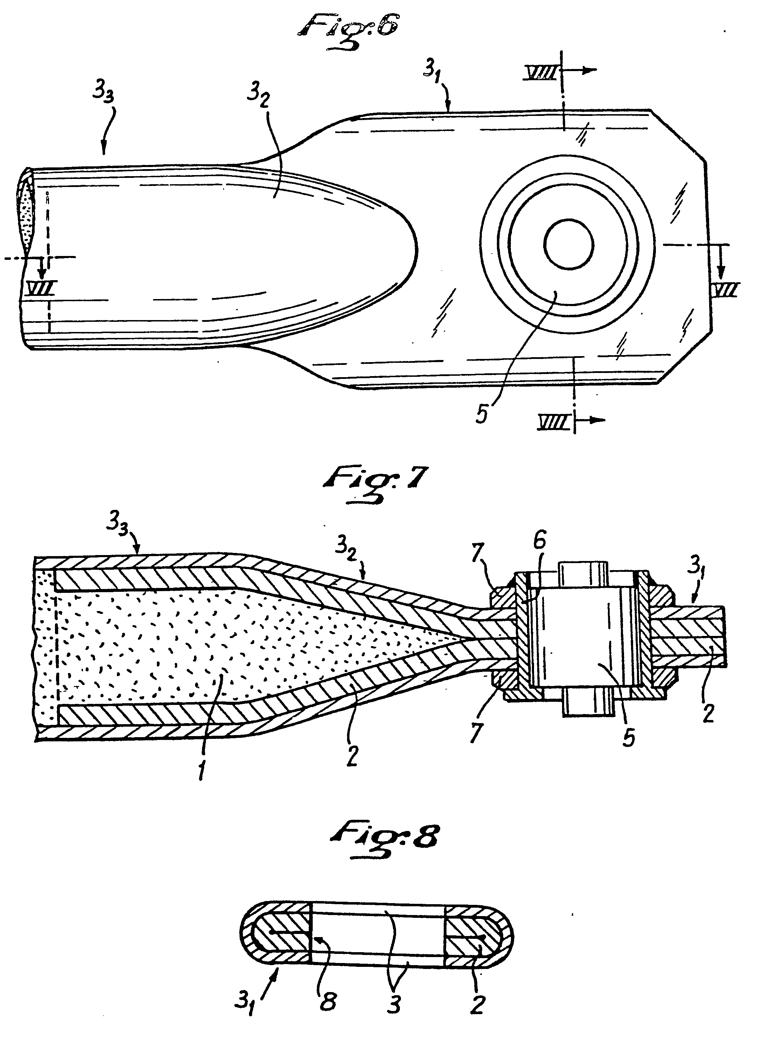

Le procédé selon l'invention est destiné à obtenir une bielle de commande ou de transmission d'efforts dont une extrémité est représentée par les figures 6 et 7. Sur la figure 7, on peut voir que le gros œuvre de ladite bielle comprend un remplissage intérieur 1 en matériau plastique cellulaire déformable sous effort léger, un manchon d'extrémité 2 en stratifié tissu-résine, et un corps 3 également en stratifié tissu-résine.

Ce tissu de fibres résistantes peut être du tissu de verre, de carbone ou de fibres de « Kevlar » (Marque déposée), et la résine peut être une résine thermodurcissable, telle que la résine époxy.

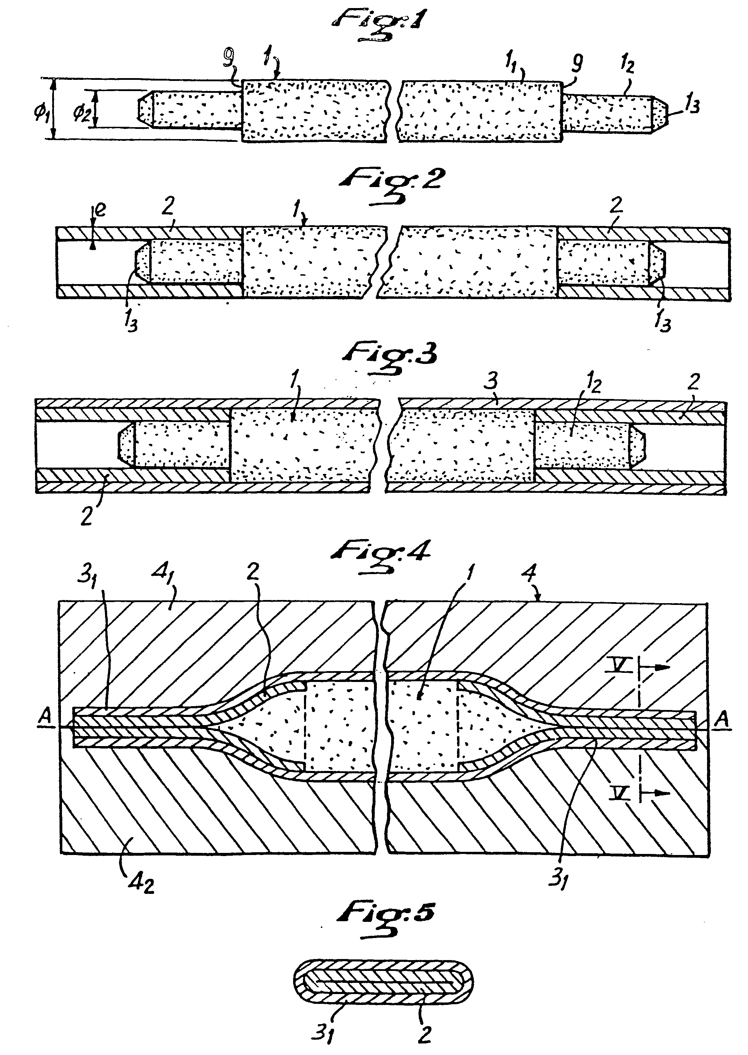

La partie intermédiaire $3_3$ du corps 3 a une section par exemple circulaire, l'extrémité $3_1$ une section oblongue comportant deux côtés parallèles réunis aux extrémités par deux lignes sensiblement demi-circulaires (voir les figures 5 et 8). L'extrémité $3_1$ et la partie $3_3$ sont reliées par une partie de section évolutive $3_2$.

Le manchon 2 s'étend de l'extrémité $3_1$ de la bielle jusqu'à sa partie circulaire $3_3$, où il peut pénétrer sur une longueur plus ou moins grande. Les parois intérieures opposées dudit manchon se rejoignent dans l'extrémité $3_1$. Cette extrémité $3_1$ peut avoir une longueur sensiblement égale à la moitié de la longueur dudit manchon 2.

La figure 1 montre un mode de réalisation préféré d'un mandrin selon l'invention, destiné à servir à la fois à la réalisation d'une bielle par enroulement, au remplissage complet de l'intérieur de celle-ci et à la conformation aisée des extrémités de ladite bielle.

Ce mandrin permet de réaliser de façon simple et peu coûteuse la bielle selon l'invention, dont un exemple est donné par les figures 6 et 7. Il peut être injecté sous pression dans un moule ayant sa forme extérieure ou encore être usiné de façon classique. Cette mousse peut être, par exemple, une mousse de polyuréthane rigide injectée.

Le mandrin, qui porte la référence d'ensemble 1, comporte une partie cylindrique intermédiaire $1_1$, dont la longueur correspond à la longueur totale de la bielle diminuée des longueurs des deux parties extrêmes manchonnées de la bielle à réaliser. Le diamètre ∅1 de la partie $1_1$

correspondant au diamètre intérieur du corps de la bielle. La partie intermédiaire $1_1$ comporte à ses deux extrémités deux prolongements cylindriques coaxiaux $1_2$, de plus faible diamètre, reliés à celui-ci par des épaulements 9. A leur extrémité libre, les prolongements $1_2$ sont pourvus respectivement de parties tronconiques $1_3$.

La longueur totale d'un ensemble $1_2$-$1_3$ correspond sensiblement à la longueur manchonnée de l'extrémité de la bielle dans la partie évolutive $3_2$ du corps 3 (longueur manchonnée moins longueur aplatie). Le diamètre $\varnothing 2$ des parties $1_2$ correspond au diamètre maximal de la partie manchonnée de la bielle.

Si l'épaisseur du manchon est e, on doit avoir

$$e = \frac{\varnothing 1 - \varnothing 2.}{2}$$

La partie tronconique $1_3$ a une longueur et une pente adaptées aux possibilités de déformations plastiques de la mousse utilisée. Elle permet, comme on le verra plus loin, d'obtenir un remplissage d'épaisseur quasiment nulle au début de la partie aplatie intérieure dudit manchon, c'est-à-dire à l'extrémité dudit remplissage.

Comme le montre la figure 2, sur le mandrin 1 on enroule plusieurs tours (ou plusieurs « plis ») du tissu préimprégné de résine sur les prolongements $1_2$. Chaque enroulement 2 ainsi obtenu est effectué jusqu'à atteindre extérieurement le diamètre de la partie $1_1$. De plus, chaque enroulement 2 se prolonge vers l'extérieur au-delà de la partie $1_3$ correspondante. Ces enroulements ont une longueur égale à la longueur dudit manchon avant finition de la bielle, et vont par la suite constituer les manchons 2.

Ensuite, comme montré sur la figure 3, sur le mandrin 1 et sur les deux enroulements 2 de tissu préimprégné, on effectue un enroulement supplémentaire 3 recouvrant sur toute sa longueur l'ensemble 1-2. Cet enroulement va constituer, après aplatissement de ses extrémités et polymérisation de la résine, le corps 3 de la bielle. il a donc une épaisseur sensiblement égale à celle dudit corps terminé et une longueur égale à celle de la bielle avant finition des embouts. Le nombre des tours des enroulements 2 et 3 est fonction de l'épaisseur du corps de bielle et de son extrémité, que l'on désire obtenir.

L'ensemble 1, 2, 3 de la figure 3 est ensuite disposé dans un moule 4 constitué par deux demi-moules $4_1$ et $4_2$ dont les plans de joint passent par l'axe dudit ensemble et sont confondus avec le plan de symétrie de la bielle, parallèle aux deux côtés parallèles de la section oblongue de la partie 3 (voir figure 4).

L'intérieur du moule complet présente la forme de la bielle avant finition et comporte comme celle-ci les parties $3_3$, $3_2$ et $3_1$. Ledit moule est, par exemple, en alliage léger.

Lors de la mise en place de l'ensemble de la figure 3 dans le moule 4, les extrémités sont aplaties et prennent leur forme définitive.

Le moule est ensuite porté à 120 °C pendant 1 h 30 afin de polymériser la résine des tissus imprégnés.

Après refroidissement jusqu'à une température de 40 °C, la bielle est sortie du moule et les extrémités sont détourées selon la mise à longueur déterminée, puis percées pour y réaliser un œil 8 destiné à recevoir la rotule, le roulement, le coussinet ou organe de liaison analogue 5, qui sera serti.

On voit sur les figures 6, 7 et 8 une extrémité de la bielle ainsi terminée et équipée. Le bord extrême des parties aplaties est détouré selon la forme indiquée sur la figure 6 de façon à obtenir une longueur hors tout déterminée de la bielle.

L'œil 8 est percé et alésé. Son axe est situé sur l'axe longitudinal de la bielle et perpendiculaire aux côtés parallèles de l'embout aplati. La position de l'axe transversal est déterminée de façon à obtenir une longueur entre axes déterminée des éléments de liaisons rapportés.

De façon connue, l'organe de liaison 5 est ensuite serti dans l'œil 8 par l'intermédiaire d'une bague en métal 6 et de deux rondelles 7, comme on peut le voir sur la figure 7.

Compte tenu de l'épaisseur d'embout qu'il est possible d'obtenir selon l'invention, c'est-à-dire de la section travaillante utilisable, il est possible de ne pas utiliser de rondelles 7, ce qui constitue un des avantages de l'invention.

En effet, à cause du faible poids et de la facilité de formage du tissu préimprégné, le manchon 2 peut avoir une épaisseur importante (voir figure 8).

La bielle obtenue selon l'invention procure un gain de masse important par rapport à une bielle classique à corps métallique tout en offrant une résistance comparable pour les efforts statiques axiaux.

De plus, ladite bielle est totalement étanche et incorrodable.

Elle ne nécessite aucun traitement de surface (peinture, impression, etc.).

Lorsque l'on doit assurer une continuité électrique entre les différents éléments d'une chaîne de commande, il suffit de déposer sur la bielle un mince ruban de peinture conductrice reliant les alésages 8.

## Revendications

1. Procédé pour la réalisation d'une bielle de commande ou de transmission d'efforts comportant un corps tubulaire (3) en stratifié de fibres à haute résistance imprégnées de résine polymérisable, dont au moins l'une des extrémités (31) a été aplatie pour y agencer un organe de liaison (5), caractérisé en ce que l'on commence par réaliser un élément tubulaire (3) de fibres à haute résistance imprégnées de résine polymérisable, en ce que l'on procède ensuite à l'aplatissement de ladite extrémité ($3_1$) de manière que celle-ci soit obturée, après quoi on procède à la polymérisation de la résine imprégnant ledit élément (3), puis on agence ledit organe de liaison (5) dans la partie aplatie et durcie dudit élément (3).

2. Procédé selon la revendication 1, caractérisé en ce que l'élément tubulaire (3) est obtenu par enroulement, sur un mandrin (1) en une matière légère, rigide et déformable, des fibres à haute résistance enrobées de résine polymérisable et ledit mandrin (1) reste en place à l'intérieur dudit élément tubulaire pendant l'aplatissement de la ou des extrémités de celui-ci et la polymérisation de la résine.

3. Procédé selon la revendication 2, caractérisé en ce que, pour l'obtention de l'élément tubulaire (3), on utilise un mandrin (1) dont la longueur est au plus égale à celle de l'élément tubulaire (3) et dont les extrémités ($1_2$) présentent éventuellement un moindre diamètre que le reste dudit élément, afin de favoriser la mise en forme des extrémités ($3_1$, $3_2$) de l'élément tubulaire (3) au moment de leur aplatissement, tout en permettant un remplissage complet dudit élément.

4. Procédé selon l'une des revendications 2 ou 3, caractérisé en ce qu'entre une extrémité ($1_2$) du mandrin (1) et une extrémité de l'élément tubulaire (3), on dispose un manchon (2) de fibres à haute résistance imprégnées de résine polymérisable qui se trouve appliqué sensiblement contre la paroi intérieure de l'extrémité dudit élément (3), puis on procède à l'aplatissement de ladite extrémité ($3_1$) au moins jusqu'à ce que les portions de face intérieure dudit manchon (2), disposées de part et d'autre du plan d'aplatissement, soient appliquées l'une contre l'autre en obturant de façon sensiblement totale la section de la portion aplatie ($3_1$) de ladite extrémité de l'élément (3) et, après ledit aplatissement, on procède simultanément à la polymérisation de la résine imprégnant ledit manchon (2) et de celle imprégnant ledit élément (3).

5. Procédé selon la revendication 4, caractérisé en ce que, pour l'obtention de l'élément tubulaire (3), on utilise un mandrin (1) qui, à au moins une extrémité, présente un prolongement ($1_2$) de moindre diamètre, coaxial au reste dudit mandrin, mais séparé de celui-ci par un épaulement (9).

6. Procédé selon la revendication 5, caractérisé en ce que, sur ce prolongement ($1_2$), on enroule des fibres à haute résistance imprégnées de résine polymérisable pour former ledit manchon (2) jusqu'à ce que le diamètre de celui-ci soit sensiblement égal au diamètre normal du mandrin, puis sur le mandrin (1) et sur ledit manchon (2) ainsi réalisé, on enroule les fibres à haute résistance imprégnées de résine polymérisable destinées à former l'élément tubulaire (3).

7. Procédé selon la revendication 6, caractérisé en ce que l'on établit la longueur du manchon (2) de fibres à haute résistance imprégnées de résine polymérisable plus grande que la longueur du prolongement ($1_2$) de moindre diamètre, pour se prolonger vers l'extérieur de ce prolongement sur une longueur sensiblement égale à la portion d'extrémité aplatie ($3_1$) de l'élément tubulaire.

8. Procédé selon la revendication 5, caractérisé en ce que l'extrémité libre ($1_3$) du prolongement est effilée.

9. Procédé selon l'une des revendications 2 à 8, caractérisé en ce que l'on réalise le mandrin (1) en une seule pièce de mousse plastique rigide.

**Claims**

1. Process for making a connecting rod for controlling or transmitting efforts, comprising a tubular body (3) of laminated high resistance fibers impregnated with polymerisable resin, of which at least one of the ends ($3_1$) has been flattened to form a connecting member (5), characterised in that a tubular element (3) of high strength fibers impregnated by polymerisable resin is firstly made, in that said end ($3_1$) is then flattened so that it is obturated, after which the resin impregnating said element (3) is polymerised, then said connecting member (5) is arranged in the hardened, flattened part of said element (3).

2. Process according to Claim 1, characterized in that the tubular element (3) is obtained by winding, on a mandrel (1) made of a light, rigid and deformable material, high strength fibers coated with polymerisable resin and said mandrel (1) remains in position inside said tubular element during the flattening of the or each end thereof and the polymerisation of the resin.

3. Process according to Claim 2, characterized in that, for obtaining the tubular element (3), a mandrel (1) is used whose length is at the most equal to that of the tubular element (3) and the ends ($1_2$) of said mandrel possibly have a smaller diameter than the rest of said element, in order to promote the shaping of the ends ($3_1$, $3_2$) of said element, in order to promote the shaping of the ends ($3_1$, $3_2$) of the tubular element (3) at the moment of flattening thereof, whilst allowing a complete filling of said element.

4. Process according to one of Claim 2 or 3, characterized in that, between one end ($1_2$) of the mandrel (1) and one end of the tubular element (3) a sleeve (2) of high strength fibers impregnated with polymerisable resin is disposed, which sleeve is applied substantially against the inner wall of the end of said element (3), then said end (3) is flattened at least until the inner face portions of said sleeve (2), disposed on either side of the plane of flattening, are applied against one another, substantially completely obturating the section of the flattened portion ($3_1$) of said end of the element (3) and, after said flattening, the resin impregnating said sleeve (2) and that impregnating said element (3) are polymerised simultaneously.

5. Process according to Claim 4, characterized in that, to obtain the tubular element (3) a mandrel (1) is used, which, at at least one end, presents an extension ($1_2$) of smaller diameter, coaxial to the rest of said mandrel, but separated therefrom by a shoulder (9).

6. Process according to Claim 5, characterized in that, on this extension ($1_2$) high strength fibers impregnated with polymerisable resin are wound to form said sleeve (2) until the diameter thereof is substantially equal to the normal diameter of the mandrel, then, on the mandrel (1) and on said sleeve (2) thus made, the high strength fibers impregnated with polymerisable resin adapted to form the tubular element (3) are wound.

7. Process according to Claim 6, characterized in that the length of the sleeve (2) of high strength fibers impregnated with polymerisable resin is chosen to be greater than the length of the extension ($1_2$) of smaller diameter, to extend outwardly of this extension over a length which is substantially equal to the flattened end portion ($3_1$) of the connecting rod.

8. Process according to Claim 5, characterized in that the free end ($1_3$) of the extension is tapering.

9. Process according to one of Claims 2 to 8, characterized in that the mandrel (1) is in one piece, made of a rigid plastic foam.


**Ansprüche**

1. Verfahren zum Herstellen einer Betätigungs- oder Kräfteübertragungsstange bestehend aus einem röhrenförmigen Körper (3) aus mit polymerisierbarem Harz imprägnierten Lamellenfasern hoher Festigkeit, dessen zumindest eine Ende ($3_1$) zum Anordnen eines Verbindungsorgans (5) abgeflacht worden ist, dadurch gekennzeichnet, daß zunächst ein Röhrenteil aus hochfesten, mit einem polymerisierbaren Harz imprägnierten Fasern gefertigt wird, daß das Ende ($3_1$) dann abgeflacht wird, so daß es verschlossen ist, wonach das das Teil (3) imprägnierende Harz polymerisiert wird und hiernach das Verbindungsorgan (5) im gehärteten, abgeflachten Teil oder Abschnitt des Teils (3) angeordnet wird.

2. Verfahren nach Anspruch 1, dadurch gekennzeichnet, daß das Röhrenteil geschaffen wird, indem auf einen Dorn (1) aus einem leichten, starren und verformbaren Werkstoff hochfeste, mit polymerisierbarem Harz überzogene Fasern gewickelt werden und der Dorn (1) während des Abflachens des oder jedes Endes und der Polymerisierung des Harzes im Röhrenteil in seiner Stellung verbleibt.

3. Verfahren nach Anspruch 2, dadurch gekennzeichnet, daß zur Schaffung des Röhrenteils (3) ein Dorn (1) verwendet wird, dessen Länge höchstens gleich ist der Länge des Röhrenteils (3) und dessen Enden ($1_2$) gegebenenfalls einen kleineren Durchmesser als der verbleibende Röhrenteil aufweisen, um so die Formung der Enden ($3_1$, $3_2$) des Teils (3) zum Zeitpunkt ihrer Abflachung zu unterstützen, wobei ein vollständiges Anfüllen des Teils (3) ermöglicht wird.

4. Verfahren nach einem der Ansprüche 2 oder 3, dadurch gekennzeichnet, daß zwischen einem Ende ($1_2$) des Dorns (1) und einem Ende des Röhrenteils (3) eine Muffe (2) aus hochfesten, mit polymerisierbarem Harz imprägnierten Fasern angeordnet ist, die weitgehend gegen die Innenwand des Endes von Teil (3) angedrückt wird, wonach das Ende ($3_1$) zumindest so weit abgeflacht wird, bis die beidseitig der Abflachungsebene liegenden Innenflächenabschnitte der Muffe (2) gegeneinander gedrückt werden, indem der Querschnitt des abgeflachten Abschnitts ($3_1$) des Endes von Teil (3) weitgehend verschlossen und nach dem Abflachen gleichzeitig das Harz polymerisiert wird, durch das die Muffe (2) und das Teil (3) imprägniert werden.

5. Verfahren nach Anspruch 4, dadurch gekennzeichnet, daß zur Schaffung des Röhrenteils (3) ein Dorn (1) verwendet wird, der zumindest an einem Ende eine Verlängerung ($1_2$) kleineren Durchmessers aufweist, die mit dem übrigen Dorn koaxial verläuft, jedoch von diesem durch einen Bund (9) getrennt ist.

6. Verfahren nach Anspruch 5, dadurch gekennzeichnet, daß auf dieser Verlängerung ($1_2$) hochfeste, mit polymerisierbarem Harz imprägnierte Fasern zur Ausbildung der Muffe (2) gewickelt werden, bis deren Durchmesser im wesentlichen dem normalen Durchmesser des Dorns entspricht, wonach auf den so geschaffenen Dorn (1) und die sogeschaffene Muffe (2) hochfeste, mit polymerisierbarem Harz imprägnierte und zur Ausbildung des Röhrenteils (3) geeignete Fasern gewickelt werden.

7. Verfahren nach Anspruch 6, dadurch gekennzeichnet, daß die Länge der Muffe (2) aus hochfesten, mit polymerisierbarem Harz imprägnierten Fasern so beschaffen ist, daß sie größer ist als die Länge der Verlängerung ($1_2$) kleineren Durchmessers, um sich über einer Länge von dieser Verlängerung nach außen zu erstrecken, die im wesentlichen gleich ist dem abgeflachten Endabschnitt ($3_1$) des Röhrenteils.

8. Verfahren nach Anspruch 5, dadurch gekennzeichnet, daß das freie Ende ($1_3$) der Verlängerung zugespitzt ausgebildet ist.

9. Verfahren nach einem der Ansprüche 2 bis 8, dadurch gekennzeichnet, daß der Dorn (1) aus einem Stück aus steifem Plastikschaum gefertigt ist.

1/2

**Fig. 1**

**Fig. 2**

**Fig. 3**

**Fig. 4**

**Fig. 5**

1

Fig.6

$3_3$  $3_2$  $3_1$  5  VIII

Fig.7

$3_3$  $3_2$  7  6  $3_1$  7  2  1  2  5

Fig.8

$3_1$  8  3  2